## Europäisches Patentamt

## European Patent Office

## Office européen des brevets

(19)

(11) Veröffentlichungsnummer: **0 044 033**

**A1**

(12)
# EUROPÄISCHE PATENTANMELDUNG

(21) Anmeldenummer: **81105305.7**

(22) Anmeldetag: **08.07.81**

(51) Int. Cl.³: **G 06 F 15/16**

(30) Priorität: **11.07.80 DE 3026362**

(43) Veröffentlichungstag der Anmeldung:
**20.01.82  Patentblatt  82/3**

(84) Benannte Vertragsstaaten:
**AT BE CH FR GB IT LI LU NL SE**

(71) Anmelder: **SIEMENS AKTIENGESELLSCHAFT Berlin
und München
Postfach 22 02 61
D-8000 München 22(DE)**

(72) Erfinder: **Pooch, Gerhard
Nordendstrasse 119
D-8080 Emmering(DE)**

(72) Erfinder: **Mayer, Johann
Kapuzinerstrasse 1
D-8000 München 2(DE)**

(54) **Einrichtung zum schnellen blockorientierten Datentransfer zwischen zwei sich im Betrieb befindlichen Rechnern.**

(57) Vorliegende Erfindung betrifft eine Einrichtung zum schnellen blockorientierten Datentransfer zwischen zwei sich im Betrieb befindlichen, jeweils einen Eingabe-Ausgabebaustein EB1, AB1 bzw. EB2, AB2 aufweisenden Rechnern RE1, RE2.

Es ist vorgeschlagen, daß beiden Rechnern eine Befehls/Steuereinrichtung B/STE gemeinsam zugeordnet ist und daß zur Durchführung eines Datentransfers der den Datentransfer wünschende Rechner RE1 durch einen Unterbrechungsbefehl bzw. Interrupt INT1 den anderen Rechner RE2 über die Befehls/Steuereinrichtung hierzu auffordert, der seine Bereitschaft seinerseits ebenfalls durch einen Unterbrechungsbefehl bzw. Interrupt INT2 zurückmeldet und damit die Eingabe-Ausgabebausteine aktiviert.

**0044033**

SIEMENS AKTIENGESELLSCHAFT                Unser Zeichen
Berlin und München                        VPA   80 P 6 6 2 4 E

Einrichtung zum schnellen blockorientierten Datentransfer zwischen zwei sich im Betrieb befindlichen Rechnern.

Die Erfindung betrifft eine Einrichtung zum schnellen blockorientierten Datentransfer zwischen zwei sich im Betrieb befindlichen Rechnern, die hierzu jeweils einen Eingabe-Ausgabebaustein aufweisen und bei der die Eingabe-Ausgabebausteine durch eine Datenübertragungsleitung miteinander in Verbindung stehen.

Zum Transfer von Daten zwischen zwei Rechnern ist aus "Advanced Micro Devices: Product Selection Guide, 1978, Seite 4-44" das DMA-Verfahren (direkter Speicherzugriff) bekannt. Zwar erfolgt bei diesem Verfahren der Datentransfer mit einer relativ hohen Geschwindigkeit, doch ist hierfür auch ein relativ hoher Aufwand nötig.

Das aus "Intel: Application Note AP-15, 1976, Seite 20" bekannte Hand-Shaking-Verfahren weist den Nachteil auf, daß jede übertragene Informationseinheit (z.B. ein Wort) auf der Empfangsseite erst quittiert werden muß, ehe die nächste Informationseinheit übertragen werden kann. Dieser asynchrone Betrieb hinsichtlich der Ausgabe-Eingabe hat eine relativ niedrige Übertragungsgeschwindigkeit zur Folge und erfordert darüber hinaus eine erhöhte Anzahl von Steuersignalen.

Der Erfindung liegt die Aufgabe zugrunde, die Nachteile bisheriger Verfahren zum Datentransfer zwischen zwei sich im Betrieb befindlichen Rechnern zu beseitigen und eine Einrichtung anzugeben, bei der ein schneller, blockorientierter Datentransfer mit möglichst einfachen

Lf 1 Toi / 11.07.1980

Mitteln realisiert und darüberhinaus eine synchrone
Ausgabe-Eingabe eines zu übertragenden Datenblocks
gewährleistet wird.

Diese Aufgabe wird erfindungsgemäß dadurch gelöst, daß
beiden Rechnern eine Befehls/Steuereinrichtung gemeinsam zugeordnet ist, bestehend aus den Rechnern zugehörigen Steuereinrichtungen, die einerseits durch Befehlsübertragungsleitungen miteinander und andererseits
mit dem jeweils rechnerzugehörigen Eingabe-Ausgabebaustein verbunden sind und daß hierbei zur Durchführung
eines Datentransfers der den Datentransfer wünschende
Rechner durch einen Unterbrechungsbefehl (Interrupt)
die Befehls/Steuereinrichtung den anderen Rechner hierzu auffordert, der seine Bereitschaft seinerseits ebenfalls über die Befehls/Steuereinrichtung durch einen
Unterbrechungsbefehl (Interrupt) zurückmeldet und damit
die Eingabe-Ausgabebausteine für eine synchrone Ausgabe-
Eingabe eines über die Datenübertragungsleitung zu
transferierenden Datenblocks aktiviert.

Der Erfindung liegt die Erkenntnis zugrunde, daß mit
der Aufforderung zum Datentransfer durch einen Interrupt
auf der Sendeseite, der Bereitschaft auf der Empfangsseite und deren Rückmeldung zur Sendeseite ebenfalls
durch einen Interrupt ein zentrales, gleichsam übergeordnetes Instrumentarium geschaffen wird, das die vor
der Übertragung der nächsten Informationseinheit bisher
erforderliche, sich stets wiederholende Quittierung einer
übertragenen Informationseinheit auf der Empfangsseite
gegenstandslos macht. Hierdurch werden eine synchrone
Ausgabe-Eingabe und eine höhere Übertragungsgeschwindigkeit erzielt.

In einer weiteren Ausbildung der Erfindung ist vorgesehen, daß die beiden Unterbrechungsbefehle (Interrupts) nach Aktivierung der Eingabe-Ausgabebausteine von den
beiden Rechnern nicht mehr beachtet sind.

Weitere vorteilhafte Ausgestaltungen der Erfindung sind
in den Ansprüchen 3 und 4 angegeben.

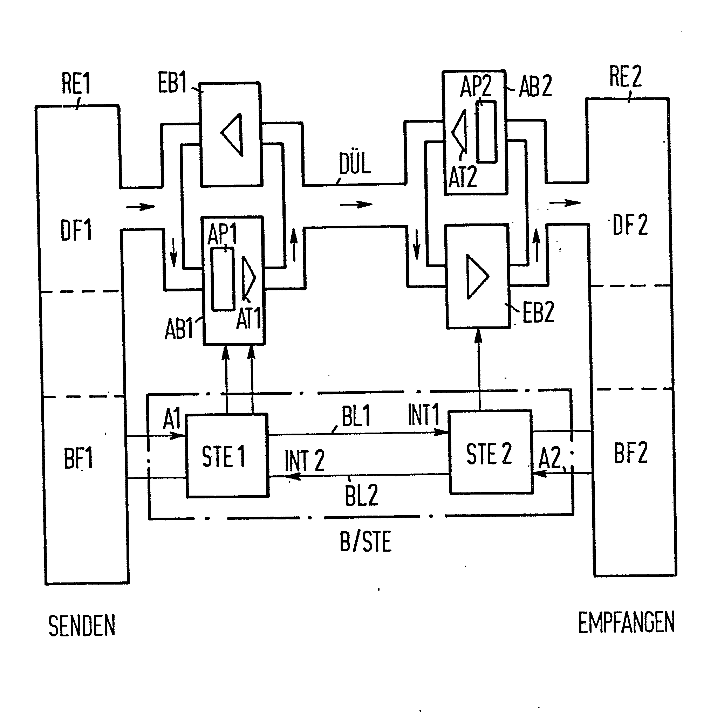

Anhand eines in der Zeichnung dargestellten Ausführungsbeispieles soll die Erfindung im folgenden noch näher
erläutert werden.

In der Figur ist der Datentransfer vom Rechner RE1
(senden) zum Rechner RE2 (empfangen) dargestellt.
Selbstverständlich kann die Übertragung der Daten auch
in umgekehrter Richtung erfolgen, doch wird aus Gründen
der Übersichtlichkeit und Zweckmäßigkeit nur die Übertragung der Daten vom Rechner RE1 zum Rechner RE2 beschrieben.
Der Rechner RE1 weist das Datenfeld DF1 und das Befehlsfeld BF1, der Rechner RE2 entsprechend das Datenfeld DF2
und das Befehlsfeld BF2 auf. Dem Rechner RE1 sind der
Eingabebaustein EB1 und der Ausgabebaustein AB1, und
dem Rechner RE2 der Eingabebaustein EB2 und der Ausgabebaustein AB2 zugeordnet. Die Eingabe-Ausgabebausteine
stehen durch eine Datenübertragungsleitung DÜL miteinander in Verbindung. Den beiden Rechnern RE1, RE2
ist eine Befehls/Steuereinrichtung B/STE gemeinsam zugeordnet. Die Befehls/Steuereinrichtung B/STE besteht
aus den beiden über Befehlsübertragungsleitungen BL1,
BL2 miteinander verbundenen Steuereinrichtungen STE1
und STE2, wobei die Steuereinrichtung STE1 dem Rechner
RE1 und die Steuereinrichtung STE2 dem Rechner RE2 zugeordnet ist. Die Steuereinrichtung STE1 ist mit dem
Ausgabebaustein AB1 des Rechners RE1 und die Steuereinrichtung STE2 mit dem Eingabebaustein EB2 des Rechners
RE2 verbunden.

Beim in der Figur dargestellten Ausführungsbeispiel ist angenommen, daß der Rechner RE1 einen Datentransfer wünscht. Hierzu gibt er einen Ausgabebefehl A1 an die ihm zugehörige Steuereinrichtung STE1 ab, in der der Unterbrechungsbefehl bzw. Interrupt INT1 erzeugt wird. Die Steuereinrichtung STE1 steuert den dem Rechner RE1 zugeordneten Ausgabebaustein AB1 in der Weise an, daß die zu übertragenden Daten in das Ausgabeport AP1 geschrieben und der Ausgabetreiber AT1 aktiv geschaltet wird. Der Interrupt INT1 gelangt über die Befehlsübertragungsleitung BL1 zum Rechner RE2, worauf der Rechner RE1 stillgesetzt wird. Der Rechner RE2, an dem der Interrupt INT1 anliegt, meldet seine Bereitschaft zum Datentransfer dadurch an den Rechner RE1 zurück, daß er einen Ausgabebefehl A2 zur Erzeugung eines weiteren Unterbrechungsbefehles bzw. Interrupts INT2 an die ihm zugehörige Steuereinrichtung STE2 abgibt. Der Interrupt INT2 gelangt über die Befehlsübertragungsleitung BL2 zum Rechner RE1. Nachdem der Eingabebaustein EB2 des Rechners RE2 durch die Ansteuerung der Steuereinrichtung STE2 aktiv geschaltet ist, erfolgt eine synchrone Ausgabe-Eingabe des über die Datenübertragungsleitung DÜL zut transferierenden Datenblocks. Nach Aktivierung der Eingabe-Ausgabebausteine EB2 und AB1 werden die beiden Unterbrechungsbefehle bzw. Interrupts von den beiden Rechnern RE1, RE2 nicht mehr beachtet.

Bei einer unterschiedlichen Taktversorgung für die beiden Rechner RE1, RE2 ist die maximale Blocklänge der zu übertragenden Daten in Abhängigkeit von der relativen Taktgenauigkeit so groß gewählt, daß Übertragungsfehler mit Sicherheit ausgeschlossen sind. So kann bei einer Taktgenauigkeit von $10^{-4}$ beispielsweise die Blocklänge der zu übertragenden Daten bis 200 Byte betragen.

Bei einer gemeinsamen Taktversorgung für beide Rechner
kann die Blocklänge der zu übertragenden Daten beliebig
groß sein.

4 Patentansprüche
1 Figur ·

Patentansprüche

1. Einrichtung zum schnellen blockorientierten Datentransfer zwischen zwei sich im Betrieb befindlichen Rechnern, die hierzu jeweils einen Eingabe-Ausgabebaustein aufweisen und bei der die Eingabe-Ausgabebausteine durch eine Datenübertrangungsleitung miteinander in Verbindung stehen, d a d u r c h   g e k e n n z e i c h n e t,   daß beiden Rechnern (RE1, RE2) eine Befehls/Steuereinrichtung (B/STE) gemeinsam zugeordnet ist, bestehend aus den Rechnern zugehörigen Steuereinrichtungen (STE1, STE2), die einerseits durch Befehlsübertragungsleitungen (BL1, BL2) miteinander und andererseits mit dem jeweils rechnerzugehörigen EingabeAusgabebaustein (EB1, AB1 bzw. EB2, AB2) verbunden sind und daß hierbei zur Durchführung eines Datentransfers der den Datentransfer wünschende Rechner durch einen Unterbrechungsbefehl (Interrupt) (INT1) über die Befehls/Steuereinrichtung den anderen Rechner hierzu auffordert, der seine Bereitschaft seinerseits ebenfalls über die Befehls/Steuereinrichtung durch einen Unterbrechungsbefehl (Interrupt) (INT2) zurückmeldet und damit die Eingabe-Ausgabebausteine für eine synchrone Ausgabe-Eingabe eines über die Datenübertragungsleitung (DÜL) zu transferierenden Datenblocks aktiviert.

2. Einrichtung nach Anspruch 1, d a d u r c h   g e k e n n z e i c h n e t,   daß die beiden Unterbrechungsbefehle (Interrupts) (INT1, INT2) nach Aktivierung der Eingabe-Ausgabebausteine (EB1, AB1 bzw. EB2, AB2) von den beiden Rechnern (RE1, RE2) nicht mehr beachtet sind.

3. Einrichtung nach Anspruch 1 oder 2 mit unterschiedlicher Taktversorgung für beide Rechner,   d a d u r c h

gekennzeichnet, daß die maximale Blocklänge der zu übertragenden Daten in Abhängigkeit von
der relativen Taktgenauigkeit nur so groß gewählt ist,
daß Übertragungsfehler mit Sicherheit ausgeschlossen
sind.

4. Einrichtung nach Anspruch 1 oder 2 mit einer gemeinsamen Taktversorgung für beide Rechner,
dadurch gekennzeichnet, daß die
Blocklänge der zur transferierenden Daten beliebig
groß ist.

RE1  EB1  AP2  AB2  RE2

DÜL

DF1  AP1  DF2

AB1  AT1  EB2

A1  BL1  INT1

BF1  STE 1  INT 2  STE 2  A2  BF2

BL2

B/STE

SENDEN  EMPFANGEN

AT2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | IEEE COMPUTER SOCIETY INTERNATIONAL CONFERENCE, Conf. 10, 25th-27th February 1975, Spring meeting, San Francisco New York, U.S.A. H.A. RAPHAEL: "Distributed intelligence microcomputer design", Seiten 21-26 \* Seite 23, Spalte 1, Zeilen 27-35; Spalte 2, Zeilen 1-12; Figur 6; Figur 7 auf Seite 24 \* | 1 |
| X | FR - A - 2 425 113 (VEB NUMERIK) \* Seite 2, Zeilen 1-22; Seite 4, Zeilen 24-28; Seite 5, Zeilen 21-39; Seite 6, Zeilen 1-15, 30-37; Seite 7, Zeilen 7-11, 31-35; Figuren 1-3 \* & DE - A - 2 912 734 | 1 |
| DE - A - 2 713 304 (SIEMENS) \* Seite 4, Zeilen 6-17; Seite 6, Zeilen 8-23; Figuren 1,2 \* | | 1 |
| A | NACHRICHTENTECHNIK ELEKTRONIK, Band 30, Nr. 4, 1980, Seiten 141-143 Berlin, DE. W. SCHÖNE et al.: "Schnelle Koppeleinheit für Mikrorechner K1520" | 1 |
| A | COMPUTER DESIGN, Band 13, Nr. 2, Februar 1974, Seiten 96,98,100 Concord, U.S.A. T.O. ANDERSON: "Computer interface-timing control logic" | 1 |

----

**KLASSIFIKATION DER ANMELDUNG (Int Cl.³)**

G 06 F 15/16

**RECHERCHIERTE SACHGEBIETE (Int. Cl.³)**

G 06 F 15/16

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-10-1981 | DHEERE |

EPA form 1503.1 06.78